# EUROPÄISCHE PATENTSCHRIFT

(11) **EP 1 686 271 B1**
(45) Veröffentlichungstag und Bekanntmachung des Hinweises auf die Patenterteilung: **16.04.2008**
(21) Anmeldenummer: 06001087.3
(22) Anmeldetag: 19.01.2006
(51) Int. Cl.: F16B 13/14

(54) **Sanddübel**
Sand dowel
Cheville en sable

(30) Priorität: 27.01.2005 DE 102005003997; 24.02.2005 DE 102005008870; 07.04.2005 DE 102005016171
(43) Veröffentlichungstag der Anmeldung: 02.08.2006
(73) Patentinhaber: Marks, Thomas, 57076 Siegen (DE)
(72) Erfinder: Marks, Thomas, 57076 Siegen (DE)
(74) Vertreter: Pürckhauer, Rolf

(56) Entgegenhaltungen:
- DE-A1- 10 209 873
- DE-U1- 29 617 495
- US-A- 1 997 513
- US-A- 4 195 952
- US-A- 4 896 416

## Beschreibung

Die Erfindung betrifft einen Sanddübel für Befestigungen in Bohrlöchern oder Aussparungen in festen Ankergründen wie Beton, Naturstein, Stahl oder anderen Vollbaustoffen.

Artgemäße Dübel sind e. g. als Kombination von Schrauben mit Kunststoffdübein bekannt. Bekannte Kunststoffdübel haben für die Abtragung von Zuglasten den Nachteil, dass der erzielbare Form- oder Reibungsverbund mit der Bohrlochwand durch die relativ geringe Festigkeit des Dübelmaterials begrenzt ist und somit keine großen Ausreißkräfte erlaubt. Zudem bestehen solche Kunststoffdübel überwiegend aus viskosen oder viskoelastischen Thermoplaste, z. B. Polyamid (PA) oder Polyethylen (PE). Sie lassen sich schon mit relativ geringer Dauerzuglast und abhängig von der Temperatur langsam aus dem Bohrloch herausziehen, und zwar umso schneller, je größer die Belastung und je höher die Temperatur ist.

Artverwandte Dübel sind e. g. als Spreiz- oder Einschlaganker bekannt. Sie bestehen überwiegend aus Metallen. Nachteile derartiger Metalldübel sind außer den hohen Materialkosten auch bekannte Korrosionsprobleme in feuchter Umgebung.

Mit DE-A1 102 09 873 sind einfache Dübelkonstruktionen mit einem nicht viskosen Sandwerkstoff bekannt geworden. Ein großer Vorteil solcher Sanddübel liegt in ihrem nahezu kriechfreien und temperaturunabhängigen Dauertragverhalten und ihrer hohen Festigkeit. Außerdem sind Sanddübel prinzipiell unempfindlich gegen Feuer, Feuchtigkeit, chemische Einwirkungen oder extreme Kälte. Die bekannten Sanddübelkonstruktionen haben jedoch den Nachteil, dass dem Vorteil der guten Verbundwirkung des Sandwerkstoffs mit der Bohrlochwand wegen der relativ großen Reibungskräfte zwischen dem Sandwerkstoff und Stahl nachteilig ein entsprechend größerer Einschraubwiderstand der Schraube entgegensteht.

Aufgabe der Erfindung ist es, einen Sanddübel für dauerhaft hohe Ausziehkräfte zu schaffen, der genauso einfach anzuwenden ist wie bekannte Kunststoffdübel.

Die Aufgabe wird überraschend einfach durch einen Sanddübel gemäß Anspruch 1 gelöst. Durch die Anordnung einer Gleitschicht zwischen Sanddübelelement und Ankerstab kann die sehr gute Verbundwirkung des Sandes mit der Bohrlochwand genutzt werden, ohne den Einschraubwiderstand einer Schraube gegenüber bekannten Kunststoffdübeln zu vergrößern.

Ein Vorteil der Erfindung liegt in der verbesserten Zugtragfähigkeit eines erfindungsgemäßen Dübels gegenüber bekannten Kunststoffdübeln. Geht man nämlich in einer vereinfachten Überlegung davon aus, dass bei vorgenannten Dübelwerkstoffen der Ausziehwiderstand eines Dübels proportional zum Einschraubwiderstand der Schraube ist, so misst sich die Verbesserung durch die Erfindung gegenüber dem Stand der Technik als Verhältnis des Reibungsbeiwertes von Stahl auf Sand zum Reibungsbeiwert von Stahl auf der erfindungsgemäßen Gleitschicht. Je nach Art des Sandes kann der Reibungsbeiwert für einen Sandwerkstoff gegen eine Stahloberfläche µ > 0,9 sein. Für andere Dübelwerkstoffe sind entsprechende Reibungsbeiwerte bekannt, z. B. 0,38 < µ < 0,45 für PA oder 0,2 < µ < 0,4 für PE-HD. Bei Verwendung von PA für die erfindungsgemäße Gleitschicht vergrößert sich also die Zugtragfähigkeit eines erfindungsgemäßen Sanddübels gegenüber einem Polyamiddübel um den Faktor 0,9 / 0,45 = 2,0 bis ca. 2,4 und gegenüber einem Kunststoffdübel aus PE-HD um den Faktor 2,25 bis 4,5. Bei Verwendung von PTFE oder Graphit als Gleitschichtmaterial lässt sich die relative Zugtragfähigkeit eines erfindungsgemäßen Sanddübels noch weiter vergrößern.

Erfindungsgemäße Sanddübel sind zusätzlich erheblich umweltfreundlicher als bekannte Kunststoffdübel, weil ca. 90% des Kunststoffanteils bekannter Kunststoffdübel durch zudem deutlich preisgünstigeren Sand ersetzt werden können.

Praktische Ausgestaltungen von erfindungsgemäßen Sanddübeln sind in den Zeichnungen dargestellt und nachfolgend beschrieben.

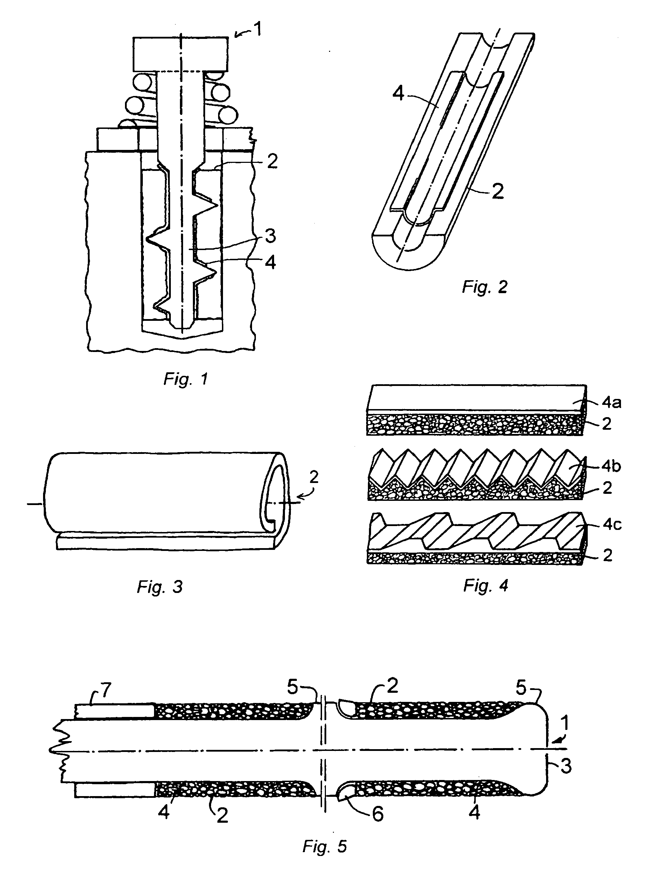

Fig. 1 zeigt in schematischer Längsschnittdarstellung eine übliche Befestigungssituation eines erfindungsgemäßen Sanddübels 1 mit einem als Gewinde formende Schraube ausgebildeten Ankerstab 3 nach dem Einschrauben in das Dübelelement 2. Die Gleitschicht 4 kann dazu vor dem Eindrehen der Schraube in Form einer dünnen gerollten Folie in das Sanddübelelement eingesteckt sein. Auch wenn die Gleitschicht durch das Schraubengewinde oder durch einzelne Sandkörner durchdrungen wird und den Kontakt zwischen Schraubenoberfläche und dem rauen Sandwerkstoff des Dübelelementes nicht vollkommen verhindert, so wird doch der Reibungswiderstand beim Eindrehen der Schraube im Sinne der Erfindung erheblich reduziert.
Fig. 2 zeigt eine erfindungsgemäße Anordnung einer Gleitschicht 4 auf der Innenseite eines halben Dübelelementteils 2. Die Gleitschicht kann dazu in flüssiger oder pulverförmiger Form aufgetragen oder in Form einer Folie an dem Dübelelement angeordnet sein.
Fig. 3 zeigt ein erfindungsgemäßes Sanddübelelement 2 in Form einer biegbaren Sandwerkstoffkonstruktion, die so in Rollenform gebogen ist, dass sie mit wenig Kraftaufwand in das vorgesehene Bohrloch eingebracht werden kann.
Fig. 4 zeigt Ausschnitte aus einem abgewickelten erfindungsgemäßen Dübelelement 2 mit unterschiedlichen Gleitschichtkonstruktionen. Die Konstruktion 4a der Gleitschicht entspricht den Dübelkonstruktionen in Fig. 1 oder Fig. 2 zur Aufnahme einer Gewinde formenden Schraube. Die Konstruktion 4b der Gleitschicht in Formschluss mit dem entsprechend geformten Sanddübelelement 2 bewirkt in Verbindung mit einer passend profilierten Gewinde formenden Schraube auch eine vorteilhafte Reduzierung der Verformungsarbeit beim Einbringen der Schraube. Mit einer konischen Profilgestaltung, wie z. B. bei bekannten Bundschwellenschrauben, ist ein erfindungsgemäßer Sanddübel wegen seiner vorteilhaften Dauerfestigkeitseigenschaften auch als kraftkontrollierter Verbundanker anwendbar. Dies gilt ebenso für die Konstruktion 4c. Im Unterschied zur Konstruktion 4b ist diese als eigenständige Konstruktion ausgebildet, was bei der Herstellung von erfindungsgemäßen Sanddübeln Vorteile haben kann. Die Gleitschicht 4 kann vorteilhaft auch aus einem hochgradig mit Quarzsandfüller angereicherten Kunststoff bestehen.
Fig. 5 zeigt einen weiteren erfindungsgemäßen Sanddübel 1 in Form eines Spreiz- oder Einschlagankers in einer Längsschnittdarstellung. Zum Aufzeigen verschiedener Ausgestaltungsmöglichkeiten ist der Sanddübel in zwei unterschiedlichen Abschnitten dargestellt. Der links dargestellte Ankerstababschnitt ist mit einer Profilrippe 5 und mit einem im Umfang ein- oder mehrteiligen Sanddübelelement 2 in Formgestalt bekannter Metall-Spreizhülsen ausgestattet. Zwischen dem Sanddübelelement und dem Ankerstab ist die Gleitschicht 4 angeordnet. Bei Verwendung einer Gleitschicht aus einem niedrig schmelzenden Thermoplast oder einem klebrigen Gleitmittel können Sanddübelelemente auch in Einzelteilen vorteilhaft mittelbar über die Gleitschicht an dem Ankerstab aufgeklebt sein. Sofern eine Hülse 7 am Ankerstab längsverschieblich angeordnet ist, kann sie vom freien Dübelende aus aktiv gegen die Stirnfläche des Dübelelements 2 gepresst oder gestoßen werden und den Sandwerkstoff vorteilhaft verdichten. Die Wirkung ist vergleichbar mit der Aufspreizwirkung von bekannten Einschlagankern. Der in Fig. 5 rechts dargestellte Dübelabschnitt zeigt den Endabschnitt eines erfindungsgemäßen Sanddübels in Form eines Spreizankers. Ein von Ankerbolzen bekanntes Krallenelement 6 ist zur Stirnfläche des Dübelelementes 2 hin längsverschieblich am Ankerstab 3 angeordnet. Bei Zugbeanspruchung des Ankers erzeugt die Kralle 6 einen Axialdruck auf das Dübelelement 2 und bewirkt über Querdehnung des Sandwerkstoffs vorteilhaft eine anfängliche Verspannung des Sanddübelelements zwischen Ankerstab und Bohrlochwand.

## Patentansprüche

1. Sanddübel für Befestigungen in zylindrischen Löchern in festen Ankergründen und Vollbaustoffen, wenigstens bestehend aus einem profilierten Ankerstab und einem überwiegend aus Sand und aus polymerem Bindemittel bestehenden ein- oder mehrteiligen Dübelelement, **dadurch gekennzeichnet, dass** zwischen dem Dübelelement (2) und dem Ankerstab (3) eine Gleitschicht (4) derart angeordnet ist, dass Reibungskräfte zwischen der Oberfläche des Ankerstabs und der Innenseite des Dübelelementes vermindert werden.

2. Sanddübel gemäß Anspruch 1 mit einem als Schraube ausgestalteten Ankerstab, **dadurch gekennzeichnet, dass** das Dübelelement (2) und/oder die Gleitschicht (4) passend zum Schraubengewinde des Ankerstabs (3) profiliert ist.

3. Sanddübel gemäß Anspruch 1 mit einem als Spreiz- oder Einschlaganker ausgestalteten Ankerstab, **dadurch gekennzeichnet, dass** das Dübelelement (2) mittelbar über die Gleitschicht (4) mit dem Ankerstab (3) verbunden ist.

## Claims

1. Sand dowel for fixations in cylindrical holes in solid anchorage and massive materials at least consisting of a moulded tie-rod and a plug element of one or more pieces consisting mainly of sand and a polymeric binder **characterized in that** an anti-friction layer (4) between the plug element (2) and the tie-rod (3) is placed in such a way that the friction forces between the surface of the moulded tie-rod and the inside of the plug element are reduced.

2. Sand dowel according to claim 1 with a tie-rod shaped as a screw **characterized in that** the plug element (2) and/or the anti-friction layer (4) is moulded fittingly to the screw thread of the tie-rod (3).

3. Sand dowel according to claim 1 with a tie-rod shaped as an expanding anchor or an anchoring bolt **characterized in that** the plug element (2) is indirectly fixed with the tie-rod (3) by the anti-friction layer (4).

## Revendications

1. Cheville en sable pour des fixations dans des trous cylindriques dans des mouillages solides et des matériaux massifs au moins consistant d'un tirant profilé et d'un élément de cheville d'une ou de plusieurs parties qui contient en majorité du sable et d'un liant polymère **caractérisé par** une couche anti-frottement (4) placée entre l'élément de cheville (2) et le tirant (3) de telle manière que les forces de frottement entre la surface du tirant et l'intérieur de l'élément de cheville soient réduites.

2. Cheville de sable selon la revendication 1 avec un tirant formé comme une vis **caractérisée par** l'élément de cheville (2) et/ou la couche anti-frottement (4) profilé en adaptant la forme de la vis filetée du tirant (3).

3. Cheville de sable selon la revendication 1 avec un tirant formé comme une ancre expansible ou un boulon d'ancrage **caractérisé par** l'élément de cheville (2) indirectement reliée avec le tirant (3) par la couche anti-frottement (4).
